Europäisches Patentamt

(19) **European Patent Office**

Office européen des brevets

(11) Numéro de publication: **0 154 571**
**B1**

(12) **FASCICULE DE BREVET EUROPEEN**

(45) Date de publication du fascicule du brevet:
13.07.88

(51) Int. Cl.⁴: **B 23 Q 7/14**, B 23 Q 3/157

(21) Numéro de dépôt: 85400131.0

(22) Date de dépôt: 28.01.85

(54) Machine convertible à phases séquentielles.

(30) Priorité: 10.02.84 FR 8402788

(43) Date de publication de la demande:
11.09.85 Bulletin 85/37

(45) Mention de la délivrance du brevet:
13.07.88 Bulletin 88/28

(84) Etats contractants désignés:
DE GB IT

(56) Documents cités:
EP - A - 0 076 231
CH - A - 148 313
CH - A - 342 816
DE - A - 1 506 893
DE - A - 3 134 195
GB - A - 2 127 765

WERKSTATTSTECHNIK, vol. 63, no. 4, avril 1973, pages 199-206, Springer-Verlag, Berlin, DE; P. SCHARF et al.: "Integrierte, flexible Fertigungssysteme"; 2. Teil: Stand und Entwicklung industrieller Konzeptionen"
MACHINES PRODUCTION, no. 195, 29 mars 1978, pages 13,15,17,19,21,23,25-27, Sofetec, Boulogne, Seine, FR; "CN: du CU aux systèmes modulaires souples d'usinage"
VDI-ZEITSCHRIFT, vol. 121, no. 3, février 1979, pages

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Gabrielli, Gino, 97, avenue de Villiers, F-75017 Paris (FR)**

(74) Mandataire: **Boivin, Claude, 9, rue Edouard-Charton, F-78000 Versailles (FR)**

(56) Documents cités: (suite)
83-95, Düsseldorf, DE; G. VETTIN: "Flexibel automatisierte Fertigungsanlagen"
WERKSTATT UND BETRIEB, vol. 107, no. 12, décembre 1974, pages 717-730, Munich, DE; J. KLAAR et al.: "WB-Lagebericht: Einsatz automatisch wechselbarer Mehrspindelbohrköpfe"
MACHINES PRODUCTION, no. 349, 27 avril 1983, pages 19-26, Sofetec, Boulogne, Seine, FR; "F. WERNER: Spécialiste de la cellule flexible"
DIE UHR, vol. 28, no. 20, 25 octobre 1973, pages 90-93, Bielefeld, DE; E. SCHIERON: "SAMA-International in Bern"
WERKSTATT UND BETRIEB, vol. 108, no. 12, décembre 1975, pages 795-796, Munich, DE; "Modell eines flexiblen Fertigungssystems"

# Description

La présente invention concerne les machines propres à effectuer des opérations d'usinage, par exemple un fraisage, un alésage ou un perçage.

Les machines d'usinage sont généralement divisées en deux types.

Les machines du premier type, dites machines transfert comportent un convoyeur sur lequel les pièces à usiner sont placées et qui font défiler ces pièces devant chaque unité d'usinage. Ce type de machine, qui est adapté aux grandes séries, nécessite un investissement important et doit comporter autant d'unités d'usinage qu'il y a d'opérations à effectuer; une machine de ce genre ne convient généralement qu'à un seul type de pièces.

Dans les machines du second type, qui sont dénommées à centre d'usinage ou convertibles, les pièces sont fixes et les différentes opérations d'usinage sont effectuées successivement à partir d'une unité d'usinage ou de plusieurs unités d'usinage travaillant simultanément, sur lesquelles on peut monter successivement divers boîtiers d'usinage.

On a déjà proposé de faire fonctionner les machines convertibles séquentiellement avec un circuit de transfert dans les boîtiers d'usinage, afin de réduire les temps de chargement des boîtiers. Dans les machines de ce genre actuellement réalisées, une séquence d'usinage se termine par l'achèvement et l'évacuation d'une pièce.

La présente invention a pour objet une machine convertible à phases séquentielles d'usinage perfectionnée de manière à réduire le temps nécessaire pour l'usinage d'une série de pièces, en éliminant au maximum les temps non productifs. Cette machine comporte au moins une unité d'usinage, mais de préférence deux unités d'usinage disposées en vis-à-vis, une table d'usinage qui est munie d'un plateau tournant indexable et de moyens de fixation de supports de pièces à usiner et qui est disposée en regard de l'unité d'usinage ou entre les deux unités d'usinage, des convoyeurs propres à livrer et ou éloigner des supports sur lesquels sont fixées les pièces à usiner, un magasin de boîtiers ou têtes d'usinage adaptables aux unités d'usinage, et des moyens de transport propres à saisir les boîtiers dans le magasin et à les amener à proximité de la ou des unités d'usinage ainsi qu'à les ramener ensuite dans le magasin.

Une telle machine convertible est connue de la fig. 13 (p.89) de la revue «VDI-Zeitschrift», 121/3, février 1979 dans l'article «Flexibel automatisierte Festigungsanlagen».

La machine selon l'invention est caractérisée par un circuit intermédiare pour loger des supports de pièces en rafale, circuit comprenant la table d'usinage et comportant en circuit fermé plusieurs portes de logement temporaire de supports reliés par des moyens d'avancement, de sorte que la table d'usinage peut recevoir sans faire intervenir les convoyeurs un nombre de pièces successives au plus égal à celui des portes de logement temporaire.

On entend ici par «circuit intermédiaire» un circuit intérieur à la machine permettant à une pièce en provenace d'un convoyeur de se déplacer dans la machine pour subir plusieurs opérations sans qu'il soit nécessaire de la sortir de la machine et dêtre ensuite ramenée à ce même convoyeur.

Grâce à cette disposition, les pièces passent par groupes ou rafales devant les mêmes boîtiers, ce qui réduit le nombre de chargements de ces boîtiers. Les temps perdus se composent du temps de chargement des boîtiers et de la somme des temps de passage des pièces diminuée du temps de passage d'une pièce car, pendant le chargement des boîtiers, le temps de passage de la première pièce est masqué.

Le circuit interne d'usinage peut comprendre un descenseur propre à amener une pièce venant de subir une opération d'usinage, à un niveau situé en dessous de la table d'usinage, des zones de travail, et un ascenseur pour ramener la pièce au niveau de la table. Il peut, par exemple, être prévu deux zones de travail. Dans ce cas, la machine peut assurer l'usinage de rafales de cinq pièces; l'une se trouve en attente d'usinage, une autre en cours d'usinage, deux autres en zone de travail, et la dernière dans l'ascenseur ou le descenseur.

La machine peut comporter deux convoyeurs disposés parallèlement aux unités d'usinage, des moyens de distribution pour faire passer chaque pièce d'un convoyer au circuit d'usinage et de ce circuit d'usinage à un convoyeur.

On a décrit ci-après, à titre d'exemple non limitatif, un mode de réalisation d'une machine convertible selon l'invention avec référence aux dessins schématiques annexés dans lesquels:

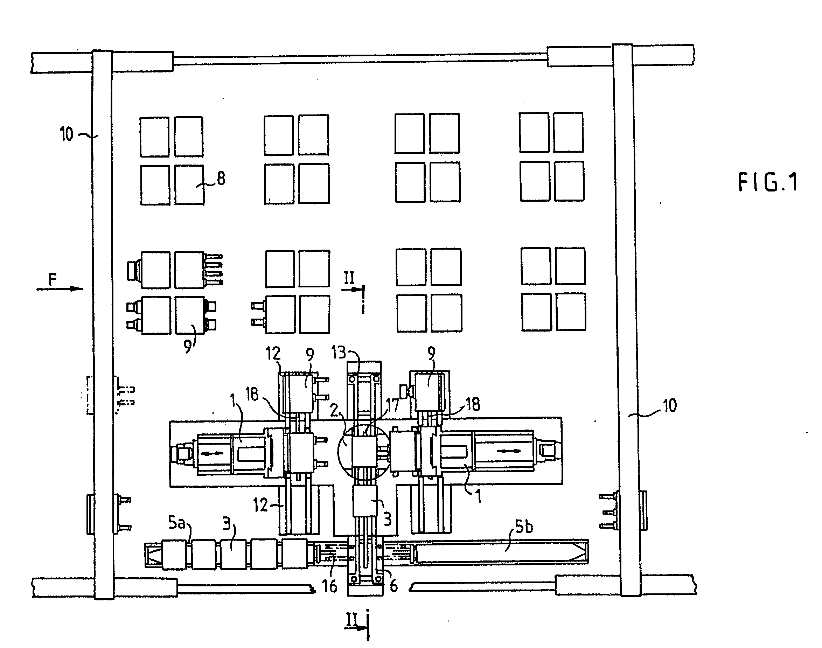

La figure 1 est une vue en plan de la machine;

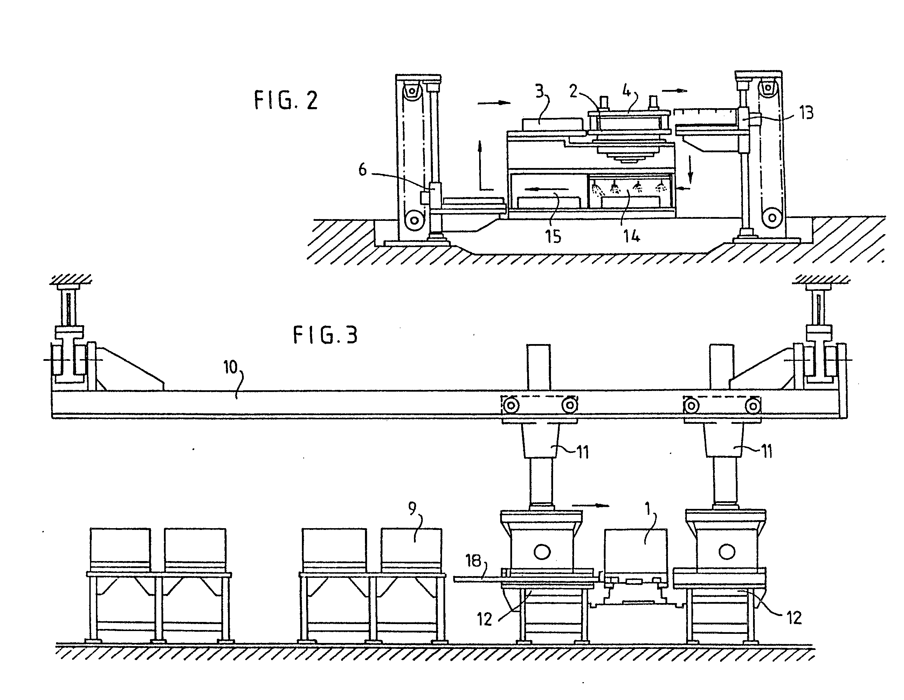

La figure 2 en est une coupe suivant II–II de la figure 1;

La figure 3 en est une vue suivant la flèche F de la figure 1.

Telle qu'elle est représentée au dessin, la machine convertible comprend deux unités d'usinage 1 disposées en vis-à-vis et entre lesquelles est disposée une table 2 avec plateau tournant indexable. Cette table est destinée à recevoir des palettes dont chacune porte une pièce à usiner, une palette et la pièce qu'elle supporte étant désignées au dessin par la référence 3, et est munie de moyens de serrage 4 propres à maintenir un ensemble palette-pièce sur la table.

Deux convoyeurs 5a et 5b pour les palettes 3 sont disposés parallèlement aux deux unités d'usinage 1, de part et d'autre d'un ascenseur 6 situé en regard de la table 2.

La machine comporte un magasin de stockage 8 pour des boîtiers ou têtes d'usinage 9 adaptables aux unités d'usinage 1, ainsi qu'un pont transporteur 1° muni de deux dispositifs de monte et baisse 11 et destiné à prélever les boîtiers 9 du magasin de stockage 8 pour les déposer sur des tables d'attente 12 prévues de part et d'autre de chaque unité d'usinage 1 et inversement pour reprendre les boîtiers ayant été utilisés pour les ramener au magasin de stockage. Des barres 18 mobiles en translation permettent d'amener un boîtier d'usinage 9 d'une table d'attente 12 à l'unité d'usinage adjacente ainsi que de ramener sur une table 12 un boîtier venant d'être utilisé.

L'ascenseur 6 fait partie d'un circuit intermédiare d'usinage disposé dans un plan perpendiculaire à l'axe des unités d'usinage 1 et comportant, outre l'ascenseur, un descenseur 13, ce descenseur et l'ascenseur 6 étant disposés de part et d'autre de l'axe de la table 2, et un circuit horizontal qui passe sous cette table 2 et peut comporter une zone de lavage et de soufflage 14 ainsi qu'une zone 15 d'évacuation des copeaux.

Un dispositif 16 permet d'amener une palette avec la pièce qu'elle supporte, d'un convoyeur 5a ou 5b sur l'ascenseur 6 en position haute et inversement de l'ascenseur sur l'un des convoyeurs. Une barre 17 permet de déplacer une palette se trouvant sur l'ascenseur pour l'amener sur la table 2, ou bien pour amener sur le descenseur 13 une palette se trouvant sur la table.

La machine qui vient d'être décrite est utilisée de la manière suivante.

Des palettes 3, en nombre égal à celui d'une rafale, par exemple cinq, se trouvent sur l'un des convoyeurs, par exemple le convoyeur 5a.

Chacune des palettes de la rafale est amenée successivement sur l'ascenseur 6, en position haute, puis sur la table 2 ou elle est usinée. Après usinage, elle est remplacée sur la table 2 par une deuxième palette de la rafale pendant qu'elle passe dans le descenseur 13; elle se déplace ensuite horizontalement sous la table, en traversant la zone de lavage/soufflage 14 et la zone d'évacuation des copeaux 15, et est ramenée en position par l'ascenseur 6. Le cycle est achevé. Si l'usinage n'est pas terminé, la palette avec sa pièce refait un cycle, les boîtiers 9 ayant été changés. Ce deuxième cycle sera nécessaire pour les cinq pièces de la rafale. Si l'usinage est terminé, elle est évacuée sur le même convoyeur 5a, puis immédiatement remplacée par une autre palette munie de sa pièce à usiner, venant du convoyeur 5b et appartenant à une autre rafale.

Lorsque les pièces d'une même rafale sont les unes dans le circuit intérieur et les autres sur le convoyeur 5a qui les a amenées et les reprend ensuite, des pièces de la rafale suivante sont amenées au poste d'usinage ou dans le circuit intermédiaire en provenance du convoyeur 5b. Chacun des deux convoyeurs assure donc alternativement l'alimentation d'une rafale, puis son évacuation pendant que l'autre convoyeur assure respectivement l'évacuation de la rafale précédente et l'alimentation de la rafale suivante.

Comme chaque unité d'usinage 1 comporte deux tables d'attente 12, l'une d'elles peut être utilisée pour recevoir un boîtier 9 en attente de montage dans l'unité alors que l'autre peut être utilisée pour recevoir un boîtier en attente de retour au magasin 8. Tous les transports de boîtiers peuvent ainsi être effectués pendant qu'un autre boîtier est en cours d'utilisation, donc en temps masqué.

Chaque palette 3 est codée suivant l'opération à réaliser, à son arrivée dans la zone d'usinage 2; le code sera lu et donnera instruction au pont transporteur 10 de choisir le boîtier 9 capable de l'opération.

## Revendications

1. Machine convertible à phases séquentielles d'usinage comportant au moins une unité d'usinage (1), mais de préférence deux unités d'usinage disposées en vis-à-vis, une table d'usinage (2) qui est munie d'un plateau tournant indexable et de moyens de fixation de supports pièces à usiner et qui est disposée en regard de l'unité d'usinage ou entre les deux unités d'usinage, des convoyeurs (5a et 5b) propres à livrer et/ou éloigner des supports sur lesquels sont fixées les pièces à usiner, un magasin (8) de boîtiers ou têtes d'usinage (9) adaptables aux unités d'usinage, et des moyens de transport propres à saisir les boîtiers (9) dans le magasin (8) et les amener à proximité de la ou des unités d'usinage ainsi qu'à les ramener ensuite dans le magasin, caractérisée par un circuit intermédiaire pour loger des supports de pièces en rafale, ce circuit comprenant la table d'usinage et comportant en circuit fermé plusieurs postes de logement temporaire de supports reliés par des moyens d'avancement, de sorte que la table d'usinage peut recevoir sans faire intervenir les convoyeurs un nombre de pièces successives au plus égal à celui des postes de logement temporaire.

2. Machine selon la revendication 1, caractérisée en ce que le circuit interne d'usinage comprend un descenseur (13) propre à amener une pièce venant de subir une opération d'usinage, à un niveau situé en dessous de la table d'usinage (2), des zones de travail (14 et 15), et un ascenseur (6) pour ramener la pièce au niveau de la table.

3. Machine selon la revendication 1 ou 2, caractérisée en ce qu'elle comporte deux convoyeurs (5a et 5b) disposés parallèlement aux unités d'usinage, des moyens de distribution pour faire passer chaque pièce d'un convoyeur au circuit d'usinage et de ce circuit d'usinage à un convoyeur.

4. Machine selon l'une des revendications 1 à 3, caractérisée en ce que le circuit d'usinage est situé dans plan perpendiculaire à l'axe des unités d'usinage.

5. Machine selon l'une des revendications 1 à 4, caractérisée en ce que chaque unité d'usinage (1) est munie de part et d'autre d'au moins deux tables ou postes d'attente (12) pour les boîtiers (9) en attente d'intervention et les boîtiers en attente de rangement.

## Patentansprüche

1. In aufeinanderfolgenden Phasen umwandelbare Bearbeitungsmaschine mit mindestens einer Bearbeitungseinheit (1), aber vorzugsweise zwei einander gegenüberliegend angeordneten Bearbeitungseinheiten, einem Bearbeitungstisch (2), der mit einer in Rastschritten drehbaren Platte und Mitteln zur Befestigung von Haltevorrichtungen für die zu bearbeitenden Werkstücke versehen ist und der gegenüber der Bearbeitungseinheit oder zwischen den beiden Bearbeitungseinheiten angeordnet ist, Förderern (5a und 5b), die zum Zuführen und/oder Abführen der Haltevorrichtungen geeignet sind, auf denen die zu bearbeitenden Werkstücke befestigt sind, einem Magazin (8) für an die Bearbeitungseinheiten anpassbare Bearbeitungsgehäuse oder -köpfe (9) und Transportmittel, die dazu geeignet sind, die Gehäuse (9) im Magazin (8) zu ergreifen und sie in die Nähe der Bearbeitungseinheit oder der Bearbeitungseinheiten zu führen und sie ebenso danach in das Magazin zurückzuführen, gekennzeichnet durch einen Zwischenkreislauf, um Haltevorrichtungen für Werkstücke stoßweise zu lagern, wobei dieser Kreislauf den Bearbeitungstisch enthält und in einem geschlossenen Kreislauf mehrere Stationen zur zeitweisen Lagerung von Haltevorrichtungen aufweist, die über Vortriebsmittel derart miteinander verbunden sind, daß der Bearbeitungstisch ohne Einschalten der Förderer eine Anzahl von Werkstücken nacheinander erhalten kann, die höchstens gleich derjenigen der Stationen zur zeitweisen Lagerung ist.

2. Maschine nach Anspruch 1, dadurch gekennzeichnet, daß der innere Bearbeitungskreislauf einen Abwärtsförderer (13) aufweist, der dazu geeignet ist, ein Werkstück, das einem Bearbeitungsvorgang unterworfen worden ist, auf ein unterhalb des Bearbeitungstisches (2) gelegenes Niveau zu führen, sowie Bearbeitungszonen (14 und 15) und einen Abwärtsförderer (6), um das Werkstück auf das Niveau des Tisches zurückzuführen.

3. Maschine nach Anspruch 1 oder 2, dadurch gekennzeichnet, daß sie zwei Förderer (5a und 5b) aufweist, die parallel zu den Bearbeitungseinheiten angeordnet sind, sowie Vereilungsmittel, um jedes Werkstück von einem Förderer in den Bearbeitungskreislauf und von diesem Bearbeitungskreislauf zu einem Förderer laufen zu lassen.

4. Maschine nach einem der Ansprüche 1 bis 3, dadurch gekennzeichnet, daß der Bearbeitungskreislauf in einer Ebene senkrecht zur Achse der Bearbeitungseinheiten angeordnet ist.

5. Maschine nach einem der Ansprüche 1 bis 4, dadurch gekennzeichnet, daß jede Bearbeitungseinheit (1) beidseitig mit mindestens zwei Bereitschaftsstationen oder Tischen (12) versehen ist, für die Gehäuse (9), die in Bereitschaft zum Eingreifen, und die Gehäuse, die in Bereitschaft zur Einordnung stehen.

## Claims

1. Assisted steering for motor vehicles including a control shaft (1) mounted for rotation in a case (2) and connected to the steering wheel, a follower shaft (3) also mounted for rotation in its case and connected mechanically to a pinion (4) in mesh with the steering rack (5), a torque sensor connecting the two shafts together and comprising an axially movable output shaft, a hydraulic slide valve (13 or 13a–13b) whose slide (31, 31a or 31b) is connected to the output element of the torque detector and an assistance cylinder (10) in the feed side of which the slide valve is inserted and whose mobile element is connected to the rack (5), in which the torque sensor comprises a first end transmission element (17 or 17a) interlocked for rotation with the control shaft (1), a second end transmission element (18 or 18a) interlocked for rotation with a follower shaft (3) coaxial with the first one and fixed axially with respect thereto, and a third intermediate transmission element (22) which is coaxial with the first two and is connected to the slide (31, 31a or 31b) of the slide valve (13, 13a or 13b), this intermediate element being further connected to the second intermediate element (18 or 18a) by a first set of flexible blades (26) characterized in that this intermediate element is connected to the first transmission element (17 or 17a) by a second set (23) of flexible blades which are directed obliquely in the opposite direction to the flexible blades of the first set (26), and in that the intermediate element (22) has at its periphery a groove (29) in which is engaged one of the ends in the form of a ball joint (30) of a lever (31) mounted for pivoting with respect to the case (2), the other end of the lever being connected by a link (34, 34') to the slide (36-36a or 36b) of the slide valve.

2. Assisted steering according to claim 1, characterized in that the first (17) and second (18) transmission elements are formed by disks or plates disposed opposite each other, each of the plates having lugs (19 or 21) engaged with a clearance (20) between the lugs (21 or 19) of the other plate.

3. Assisted steering according to claim 2, characterized in that the two control (1) and follower (3) shafts are coaxial.

4. Assisted steering according to any one of claims 1 to 3, characterized in that the slide valve is formes of two half slide valves (13a and 13b) disposed on each side of the lever (31) and whose slides (36a and 36b) are connected to this lever.

5. Assisted steering according to claim 4, characterized by means for applying, to both free faces of the slides (36a and 36b), a counterpressure modulated as a function of a parameter, for example the vehicle speed.

FIG.1

0 154 571

FIG. 2

FIG. 3

0 154 571